# EUROPEAN PATENT APPLICATION

(11) **EP 3 527 884 A1**
(43) Date of publication of application: **21.08.2019**
(21) Application number: 19157245.2
(22) Date of filing: 14.02.2019
(51) Int. Cl.: F21V 21/28, F16M 11/20, F21Y 115/10

(54) **LIGHTING APPARATUS**

(30) Priority: 15.02.2018 IT 201800002703
(71) Applicant: GEWISS S.p.A., 24069 Cenate Sotto (Bergamo) (IT)
(72) Inventor: DOMENICO, BOSATELLI, 24069 CENATE SOTTO (BERGAMO) (IT)
(74) Representative: Forattini, Amelia

(57) **Abstract**

A lighting apparatus having a support device including a base member associated with a supporting member by a joint member; the base member is configured to be fastened to a fixed structure and the supporting member is associated to a lighting device; the joint member allows to orient the lighting device by rotating the supporting member about two mutually perpendicular axes that intersect the joint; the joint has a single locking screw for locking the supporting member in a chosen position.

## Description

The present invention relates to a lighting apparatus.

Support devices for lighting apparatuses are known which are equipped with a joint to orient the apparatus so as to direct the light beam in the chosen direction.

Currently commercially available products, which allow to orient the lighting apparatus on two mutually perpendicular rotation axes, have at least two separate locking screws, one for each rotation axis.

The operations for adjusting the lighting apparatus by means of such prior art devices are therefore in convenient and require long times.

US2896901 discloses a universal bracket for a loudspeaker wherein the holder of the loudspeaker can be swiveled around each of two perpendicular axes and tightened by a single screw. However, the assembly of the bracket is complicated because of the construction of the upright member and the system for fastening the upright member on the base.

US3091484 and US3533648 disclose universal swivel fittings that permit the movement of an electrical light fixture with an angle that is limited by the structure of the fittings.

WO2014/166143 discloses an all-direction camera support having support member rotatably connected to a base, wherein the support member comprises an adapter, a supporting assembly and a connecting assembly. The supporting assembly has a left supporting element and a right supporting element which are fastened to each other. One end of the left supporting element and of the right supporting element is rotatably connected to the base; one end of the connecting assembly is arranged between the other ends of the left supporting element and the right supporting element; the adapter is rotatably connected to the other end of the connecting assembly, and a locking element is provided through the left supporting element and the right supporting element. By arranging one end of the connecting assembly between the other ends of the left supporting element and the right supporting element, and adjusting the locking and loosening of the whole support by means of a locking element, the position of the camera can be adjusted in order to allow the camera to shoot at multiple angles. WO2014/166143 comprises a relatively high number of components, at least 7 components: base, adapter, two left supporting elements, two right supporting elements, and the bolt. The installing operations entail assembling the two the left and right supporting elements constituting the connecting assembly around the adapter and within the two the left and right supporting elements constituting the supporting assembly, while at the same time placing the two the left and right supporting elements constituting the supporting assembly around the base member.

The operations for assembling the lighting apparatus by using the above described prior art devices are difficult and require long times.

Also, from a production point of view, the relatively high number of components of the prior art devices increases the production costs of such devices.

The aim of the present invention is to provide a lighting apparatus having a support device that allows to orient the lighting apparatus along at least two different rotation axes and to lock it in the desired position with a faster and easier operation than conventional systems.

Within the scope of this aim, an object of the invention is to provide an orientable support device constituted by a reduced number of components.

Another object of the invention is to provide a support device that is constructively simple and at the same time is sturdy and reliable.

This aim, these objects and others which will become better apparent hereinafter are achieved by a lighting apparatus comprising a base member associated with a supporting member by a joint member; said base member being fixed to a fixed structure and said supporting member being associated to a lighting device; said supporting member, joint member, and base member, allowing to orient said lighting apparatus by rotating said supporting member and said joint member about two mutually perpendicular axes that intersect said joint member; said joint member having a single locking screw for locking said supporting member and said joint member in a desired position; said apparatus being characterized in that said joint member comprises two half-shells surrounding both a portion of said base member and a portion of said supporting member; said locking screw mutually fastening said half-shells and, depending on the degree of tightening of the screw, said half-shells allow or not the rotation of said base member and of said supporting member.

Further characteristics and advantages will become better apparent from the description of preferred but not exclusive embodiments of the invention, illustrated by way of non-limiting example in the accompanying drawings, wherein:

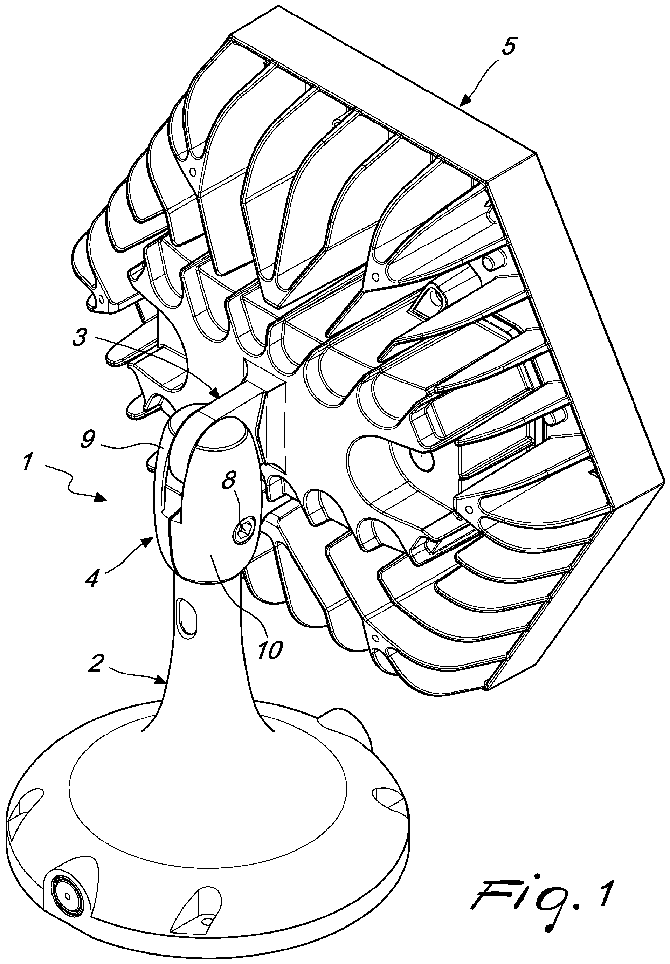

Figure 1 is a perspective view of a lighting apparatus shown in conditions of use;

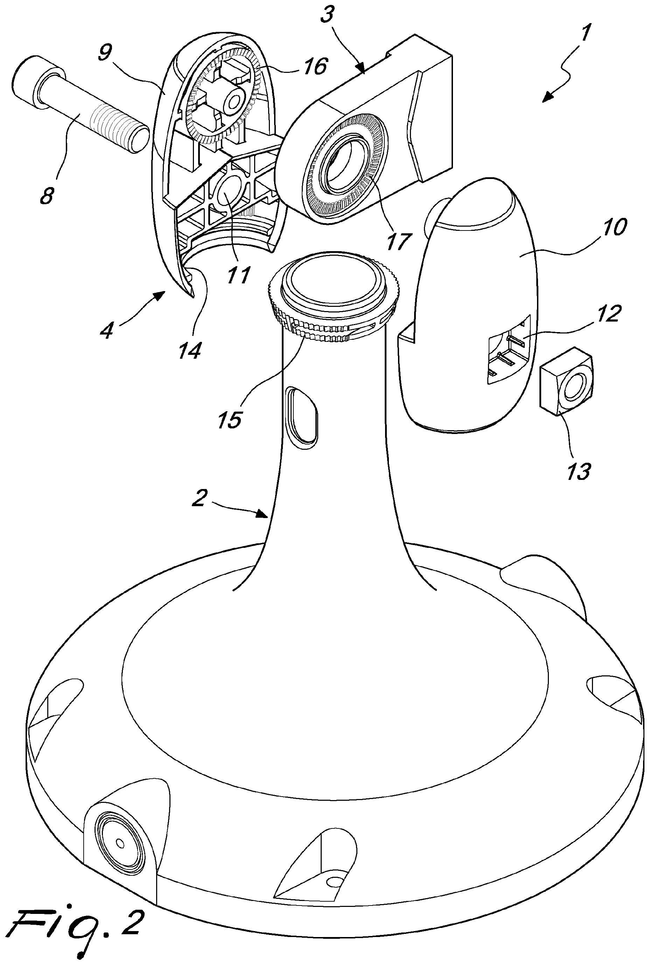

Figure 2 is a partially exploded perspective view of the support device;

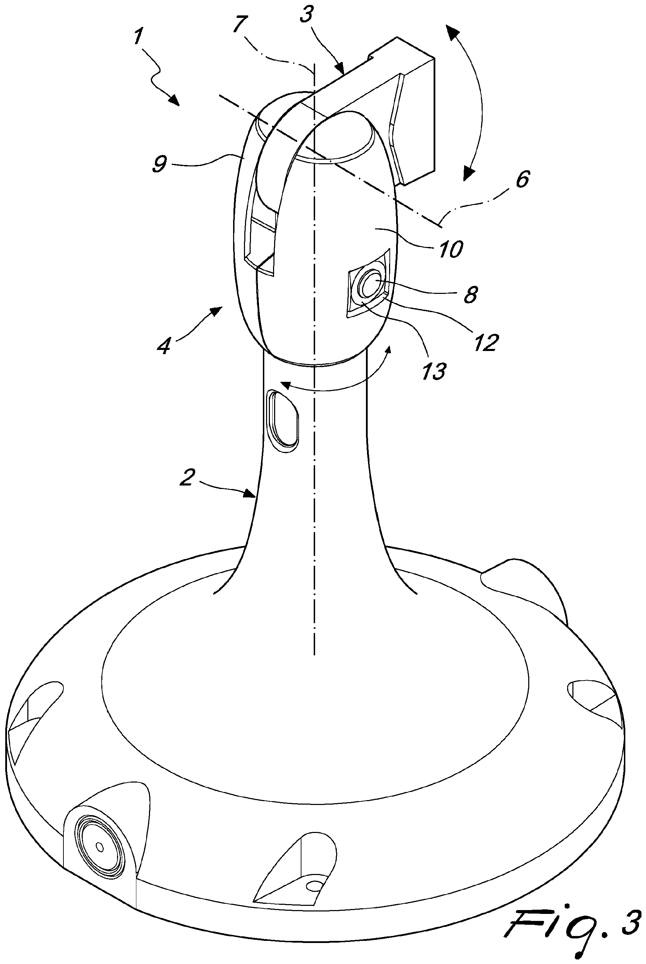

Figure 3 is a perspective view of the support device according to the present invention.

With reference to the cited figures, the lighting apparatus according to the invention has a support device, generally designated by the reference numeral 1, which includes a base member 2 which is associated with a supporting member 3 by means of a joint member 4.

The base member 2 is configured to be fastened to a fixed structure and the supporting member 3 is configured to be associated to a lighting device 5, for example a spotlight, or any other type of lamp.

The joint member 4 allows to orient the lighting device 5 by rotating the supporting member 3 about two mutually perpendicular axes which intersect the joint member, respectively a horizontal axis 6 and a vertical axis 7.

According to the present invention, the joint member 4 has a single locking screw 8, which allows to lock the supporting member 3 in a chosen position.

The joint member 4 comprises two half-shells, designated respectively by the reference numerals 9 and 10, which simultaneously surround a portion of the base member 2 and a portion of the supporting member 3 and define the joint member 4.

The locking screw 8 allows to fasten the two half-shells 9 and 10 to each other and, depending on the degree of fastening of the screw 8, the half-shells allow or not the rotation of the base member 2 and of the supporting member 3.

The half-shell 9 includes a through hole 11 for the passage of the stem of the screw 8, while the half-shell 10 is provided with a passage hole for the threaded end of the stem of the screw 8 and with a seat 12 for accommodating a nut 13, which engages the threaded end of the stem of the screw 8.

Each half-shell 9, 10 includes a collar 14 adapted to surround a ring rear 15 formed on the base member 2, so as to allow the rotation of the base member 2 with respect to the joint member 4 about the vertical axis 7.

Each half-shell 9, 10 also has a front crown gear 16 that is adapted to mate with a lateral crown gear 17 formed on both sides of the supporting member 3, so as to allow the rotation of the supporting member 3 with respect to the joint member 4 about the horizontal axis 6.

Advantageously, the parts in contact between the half-shells and the base and supporting members are provided with friction means, such as knurlings or micro-teeth, so as to allow better locking of the mutual rotation of the members.

The operation of the support device according to the present invention is simple and intuitive.

By loosening the screw 8 it is possible to orient the lighting apparatus and fix it in the desired position simply by tightening the screw 8, which locks the rotation of the members about the vertical and horizontal axes.

In practice it has been found that the invention achieves the intended aim and objects, providing a support device that provides a new support solution for a luminaire, such as an LED light motor, adapted to allow orientability on two axes of rotation.

Differently from currently commercially available products, the support device according to the present invention provides an innovative system for locking both orientations on the two axes by means of a single screw, whereas many conventional joints require at least two different screws for locking the rotations or require a complex installing operation.

The assembly operation of the apparatus is easy and straightforward: the operator simply has to partially close the half-shell 9, 10 around the supporting member 3, which is already fastened to the lighting device 5, by means of the bolt 8, 13, without tightening the bolt. The partially open half-shell 9, 10 are then placed around the ring rear 15 formed on the base member 2. The operator can tighten the bolt and lock the lighting device 5 in the desired position.

The single-screw fixing system is safe also by virtue of the presence of a friction system with micro-teeth.

A feature of the lighting apparatus according to the present invention is that it comprises a reduced number of components thus making the lighting apparatus economic.

The materials used, as well as the dimensions, may of course be any according to the requirements and the state of the art.

## Claims

1. A lighting apparatus comprising a base member associated with a supporting member by a joint member; said base member being fixed to a fixed structure and said supporting member being associated to a lighting device; said supporting member, joint member, and base member, allowing to orient said lighting apparatus by rotating said supporting member and said joint member about two mutually perpendicular axes that intersect said joint member; said joint member having a single locking screw for locking said supporting member and said joint member in a desired position; said apparatus being **characterized in that** said joint member comprises two half-shells surrounding both a portion of said base member and a portion of said supporting member; said locking screw mutually fastening said half-shells and, depending on the degree of tightening of the screw, said half-shells allow or not the rotation of said base member and of said supporting member.

2. The apparatus according to claim 1, **characterized in that** one of said half-shells comprises a through hole for the passage of a stem of said screw; the other half-shell having a passage hole for the threaded end of said stem of said screw and a seat for accommodating a nut which engages a threaded end of said stem of said screw.

3. The apparatus according to claim 1, **characterized in that** each half-shell comprises a collar adapted to surround a ring gear formed on said base member, allowing a rotation of said base member with respect to said joint member, about said vertical axis.

4. The apparatus according to claim 1, **characterized in that** each of said half-shells comprises a front crown gear adapted to mate with a lateral crown gear, formed on both sides of said supporting member, allowing a rotation of said supporting member with respect to said joint member about the horizontal axis.

5. The apparatus according to claim 1, **characterized in that** the parts in contact between the said half-shells and said base and supporting members are provided with friction means.
